# DEMANDE DE BREVET EUROPEEN

(11) **EP 4 580 075 A1**
(43) Date de publication de la demande: **02.07.2025**
(21) Numéro de dépôt: 24223251.0
(22) Date de dépôt: 24.12.2024
(51) Int. Cl.: H04B 1/7143, H04W 12/08, H04W 12/03

(54) **COMMUNICATION AU SEIN D'UN CANAL D ACCÈS PRIVÉ**

(30) Priorité: 27.12.2023 FR 2315342
(71) Demandeur: THALES, 92190 Meudon (FR)
(72) Inventeur: SOULIE, Antoine, 92622 GENNEVILLIERS CEDEX (FR); SOUMPHOLPHAKDY, Viphakone, 92622 GENNEVILLIERS CEDEX (FR); MOLIERE, Renaud, 92622 GENNEVILLIERS CEDEX (FR)
(74) Mandataire: Lavoix

(57) **Abrégé**

La présente invention concerne un procédé (10) de communication au sein d'un canal d'accès privé comprenant les étapes suivantes :
- génération (12) d'un aléa propre à être traduit, selon une règle, en une clé d'accès audit canal d'accès privé définissant une loi de saut de fréquence comprenant une pluralité de positions temporelles et fréquentielles des ressources radio à allouer, ladite règle étant connue par tout équipement propre à être autorisé à accéder audit canal et/ou à en contrôler l'accès ;
- acquisition (14) et traduction dudit aléa en ladite clé;
- en utilisant ladite clé obtenue à partir dudit aléa, demande (18) d'accès audit canal d'accès privé, et/ou autorisation (20) d'accès audit canal d'accès privé; et/ou allocation (22), audit canal d'accès privé, des ressources radio définies par ladite clé d'accès;
- communication (24) en utilisant ledit canal d'accès privé.

## Description

La présente invention concerne un procédé de communication au sein d'un canal d'accès privé dont la trame d'accès est diffusée au sein d'un réseau de communication.

La présente invention concerne également un programme d'ordinateur comportant des instructions logicielles qui, lorsqu'elles sont exécutées par un ordinateur, mettent en oeuvre un tel procédé de communication au sein d'un canal d'accès privé dont la trame d'accès est diffusée au sein d'un réseau de communication.

La présente invention concerne également un système de communication configuré pour mettre en oeuvre un tel procédé de communication au sein d'un canal d'accès privé dont la trame d'accès est diffusée au sein d'un réseau de communication.

L'invention se rapporte au domaine des communications et plus particulièrement des télécommunications, notamment des télécommunications par satellite.

Actuellement, pour les communications mobiles terrestres, les formes d'ondes cellulaires (i.e. dédiées aux réseaux cellulaires) ont un canal d'accès public dont les caractéristiques sont soit définies dans une norme (i.e. standard) 3GPP (de l'anglais *Third Génération Patnership Project*) de manière statique, soit précisées dans les informations système diffusées par chaque cellule.

Autrement dit, selon les normes actuelles associées aux communications mobiles terrestres, les terminaux utilisateurs s'attachent au réseau par le moyen d'un canal d'accès dont les caractéristiques sont publiées sur un canal de diffusion ou sont prédéfinies dans la norme (i.e. le standard).

Ce canal d'accès public est un canal d'accès en contention et des collisions peuvent s'y produire.

De plus, il est connu qu'un déni de service est malheureusement facile à implémenter sur ce type de canal. En effet, tout émetteur, suite à un décodage des informations système, peut venir brouiller uniquement ce canal d'accès, les autres terminaux émetteurs sont alors interférés sur ce canal et ne peuvent accéder au réseau. De plus, un brouilleur ciblant spécifiquement ce type de canal d'accès public et générant un déni de service est non seulement facile à réaliser mais également difficile à détecter.

Ainsi, un tel canal d'accès public tel que mis en oeuvre dans les réseaux cellulaires depuis plusieurs décennies a pour inconvénient son manque de robustesse en déni de service.

A titre d'alternative, une solution de communication consiste à ne pas mettre en oeuvre de canal d'accès public, mais un canal d'accès statique non publié en pré-réservant des ressources dédiées par terminal, ce qui est lourd en termes de planification, couteux en bande passante et préférentiellement adapté à des petits réseaux, tel que notamment mis en oeuvre au sein du système de communications militaires par satellite « System 21^{®} » développé par la Demanderesse.

L'inconvénient d'un canal d'accès statique non publié réside dans le fait qu'il devient détectable dès lors que des terminaux l'utilisent, un observateur externe étant capable de déterminer les caractéristiques de ce canal à partir du comportement observé des terminaux dans le spectre.

A titre d'alternative, une autre solution technique connue est une planification statique des terminaux, leur évitant d'avoir à demander de la ressource car disposant d'un canal d'accès privé. Toutefois, l'inconvénient de la planification statique actuelle réside dans le fait que la prise en compte ou la suppression d'une station (i.e. d'un terminal) utilisateur nécessite une intervention de re-planification non automatisée. De plus une telle planification est incompatible statique avec la mobilité et le passage à l'échelle correspondant à (i.e. étant) une capacité d'accès quasi-instantanés pour un grand nombre de terminaux utilisateurs.

Les communications par satellites vont vraisemblablement adopter les normes 3GPP issues des communications mobiles terrestres.

Ainsi, la présente invention vise en outre, plus particulièrement, une application au domaine des communications par satellite (satcom) notamment en vue d'une application de la future norme (i.e. standard) pour les réseaux non terrestres 3GPP (de l'anglais *Third Génération Patnership Project).*

Les nouvelles constellations de satellites ainsi que les satellites géostationnaires haut débit HTS (de l'anglais *High Throughput Satellite*) offrent une couverture globale ou multispots, chaque spot étant typiquement un cercle ou une ellipse de 100 à 500 km de diamètre, une couverture multispots couvrant un ou plusieurs continents, voire l'ensemble du globe.

Plus spécifiquement, un domaine de communications protégées utilise des satellites défilants en orbite non-géostationnaire, telle que l'orbite terrestre basse (LEO de l'anglais *low earth orbit*) ou l'orbite terrestre moyenne (MEO de l'anglais *medium earth orbit*)*.*

Pour de telles communications sous une constellation défilante, la couverture n'est plus globale, mais régionale sous chacun des satellites qui ne sont plus « fixes » (i.e. géostationnaires) mais défilent dans l'espace.

Pour de telles constellation de satellites en orbite de type LEO ou MEO, un terminal utilisateur (i.e. équipement) est généralement capable de déterminer de manière autonome son temps de transit. En effet, chaque satellite de ce type de constellation gère une multitude de spots. La taille du spot est en général inférieure à 100 km. Le terminal est en mesure de déterminer le spot dans lequel il se trouve, et donc sa localisation approximative, en écoutant le signal balise transmit par l'émetteur dans ce spot.

Si certaines communications brèves peuvent être faites via le même satellite défilant, en général, les communications doivent être relayées entre les satellites lorsque l'émetteur d'une communication et le récepteur correspondant ne sont pas ou plus couverts par le même satellite. En effet, les réseaux de communication terrestres étant fixes (i.e. ancrés), les stations d'ancrage ne sont pas en perpétuel déplacement pour assurer une continuité de communication avec un même satellite.

Dans le contexte des communications protégées, notamment pour des cas d'usages gouvernementaux, un déni de service, tel qu'évoqué précédemment au regard des canaux d'accès publics utilisés pour les communications mobiles terrestres, n'est pas envisageable.

Le but de l'invention est alors de proposer un canal d'accès à un réseau qui reste robuste à des attaques en déni de service et qui soit également en particulier applicable à des communications satellitaires mise en oeuvre par des constellations de satellites défilants et aptes à former une pluralité de spots.

A cet effet, l'invention a pour objet un procédé de communication au sein d'un canal d'accès privé dont la trame d'accès est diffusée au sein d'un réseau de communication d'un système de communication, le procédé comprenant les étapes suivantes :
- génération d'un aléa propre à être traduit, selon une règle prédéterminée, en une clé d'accès audit canal d'accès privé, ladite au moins une clé d'accès définissant une loi de saut de fréquence comprenant au moins une pluralité de positions temporelles et fréquentielles des ressources radio à allouer, dans ladite trame d'accès, selon ledit aléa, audit canal d'accès privé, ladite règle prédéterminée étant connue au préalable par tout équipement dudit système de communication propre à être autorisé à accéder audit canal d'accès privé et/ou à contrôler l'accès audit canal d'accès privé ;
- acquisition et traduction dudit aléa en ladite clé d'accès, par au moins un équipement propre à être autorisé à accéder audit canal d'accès privé et/ou à contrôler l'accès audit canal d'accès privé;
- en utilisant ladite clé d'accès obtenue à partir dudit aléa :
   - demande d'accès audit canal d'accès privé mise en oeuvre par ledit au moins un équipement correspondant à un terminal propre à être autorisé à accéder audit canal d'accès privé,
      et/ou
   - autorisation d'accès audit canal d'accès privé mise en oeuvre par ledit au moins un équipement correspondant à un équipement de contrôle d'accès audit canal d'accès privé ;
      et/ou
   - allocation, audit canal d'accès privé, des ressources radio définies par ladite clé d'accès, ladite allocation étant mise en oeuvre par ledit au moins un équipement correspondant à une station de base dudit système de communication ;
- communication au sein dudit système de communication en utilisant ledit canal d'accès privé, ladite communication étant mise en oeuvre par un terminal autorisé par ledit équipement de contrôle d'accès audit canal d'accès privé.

Ainsi, la présente invention propose de mettre en oeuvre un accès à un canal d'accès privé dont les ressources allouées présentent une variabilité et/ou un étalement temporel et fréquentiel. Cette variabilité ou cet étalement sont définis par au moins un aléa dérivant d'une clé de d'accès (i.e. clé de chiffrement de l'accès) prédéfinie définissant une loi de saut de fréquence comprenant au moins une pluralité de positions temporelles et fréquentielles des ressources radio à allouer, dans la trame d'accès, selon ledit aléa, audit canal d'accès privé.

Ladite loi de saut de fréquence définit ainsi le canal d'accès privé selon la présente invention par configuration d'une ressource radio (de l'anglais *radio block*) dans la matrices temps-fréquence.

Ce canal d'accès utilise nécessairement des ressources normalement utilisées par le trafic. L'aléa déterminant les caractéristiques du canal, ainsi que la méthode d'accès dans ce canal ne sont connus que du réseau et de ses équipements (i.e. des terminaux), la configuration de ces aléas étant propre à être effectuée au préalable sur le réseau.

Autrement dit, le canal d'accès ainsi défini selon la présente invention par allocation/configuration de ressources radio, notamment en liaison montante, n'est uniquement accessible que par le réseau et ses équipements qui connaissent l'aléa déterminant les caractéristiques du canal, ainsi que la méthode d'accès dans ce canal et inacessible pour un acteur malveillant souhaitant interférer, les caractéristiques de ce canal n'étant pas diffusées en tant que telles, mais au mieux uniquement une référence à ce canal

En effet, un tel acteur malveillant souhaitant interférer à au mieux connaissance du canal public tel que précité en relation avec l'état de la technique, notamment via les normes où informations diffusées au sein de ce canal public mais ne connait pas l'existence dudit canal d'accès privé selon la présente invention qu'il voit au mieux comme un trafic sur liaison montante.

Ainsi l'introduction d'aléa(s) spatio-temporel(s) variable(s) selon la présente invetion permet d'éviter qu'un terminal puisse détecter la position des ressources radio allouées par écoute de la matrice d'allocation.

Suivant d'autres aspects avantageux de l'invention, le procédé comprend une ou plusieurs des caractéristiques suivantes, prises isolément ou suivant toutes les combinaisons techniquement possibles :
- ladite loi de saut de fréquence comprenant au moins une pluralité de positions temporelles et fréquentielles des ressources radio à allouer dans ladite trame d'accès audit canal d'accès privé définit leur agencement, selon un axe fréquentiel, avec le nombre et la position des sous-porteuses allouées audit canal d'accès privé, et selon un axe temporel, avec les créneaux temporels utilisables sur lesdites sous-porteuses allouées ;
- ladite règle prédéterminée est obtenue par association préalable de chaque valeur d'aléa d'un ensemble de valeurs d'aléa distinctes respectivement à chaque allocation d'un ensemble d'allocations distinctes de ressources radio dans ladite trame d'accès ;
- ladite association prend également en compte au moins un des paramètres appartenant au groupe comprenant au moins :
   - un numéro de cellule dans lequel est localisé ledit au moins un équipement dudit système de communication correspondant à un terminal propre à être autorisé à accéder audit canal d'accès privé ;
   - un numéro de trame radio (36) propre à être émise durant une trame d'accès (34), la durée de ladite trame d'accès couvrant une pluralité de durées de trames radio, une trame radio étant dédiée à l'allocation de ressources pour les trafics utilisateurs via les terminaux dudit système de communication ;
   - un nombre prédéterminé de ressources radio contiguës à allouer lorsque ledit réseau de communication est un réseau de communications satellitaires mises en oeuvre via au moins une constellation de satellites défilants ;
   - un identifiant d'un satellite visible dudit au moins un équipement dudit système de communication correspondant à un terminal propre à être autorisé à accéder audit canal d'accès privé, lorsque ledit réseau de communication est un réseau de communications satellitaires mises en oeuvre via au moins une constellation de satellites défilants ;
- ladite association, une étape de détermination dudit identifiant de satellite visible et/ou dudit nombre prédéterminé de ressources radio contiguës à allouer, nécessaires à l'accès dudit au moins un équipement dudit système de communication correspondant à un terminal propre à être autorisé à accéder audit canal d'accès privé, sous couverture de ladite au moins une constellation de satellites défilants ;
- ladite étape de détermination est mise en oeuvre par ledit terminal en utilisant les éphémérides reçus de ladite au moins une constellation de satellites défilants ;
- ladite étape de détermination dudit nombre prédéterminé de ressources radio contiguës à allouer comprend la détermination des valeurs maximale et minimale des temps de transit depuis le centre du spot satellitaire dans lequel est localisé ledit terminal, et la prise en compte desdites valeurs maximale et minimale des temps de transit pour déterminer ledit nombre prédéterminé de ressources radio contiguës ;
- lorsque ledit réseau de communication est un réseau de communications satellitaires mises en oeuvre via au moins une constellation de satellites défilants, ladite clé d'accès définit également au moins une dimension spatiale correspondant à une direction satellitaire à utiliser par un terminal autorisé par ledit équipement de contrôle d'accès audit canal d'accès privé.

L'invention concerne également un programme d'ordinateur comportant des instructions logicielles qui, lorsqu'elles sont exécutées par un ordinateur, mettent en oeuvre un procédé de communication au sein d'un canal d'accès privé dont la trame d'accès est diffusée au sein d'un réseau de communication tel que défini ci-dessus.

L'invention concerne également un système de communication configuré pour mettre en oeuvre le procédé précédemment décrit.

L'invention apparaîtra plus clairement à la lecture de la description qui va suivre, donnée uniquement à titre d'exemple non limitatif, et faite en référence aux dessins dans lesquels :
[Fig. 1] la figure 1 est un organigramme d'un procédé de communication au sein d'un canal d'accès privé dont la trame d'accès est diffusée au sein d'un réseau de communication, selon l'invention ;
[Fig 2] la figure 2 illustre deux exemples d'allocation de ressources obtenues selon la présente invention au sein de la matrice temps fréquences ;
[Fig 3] [Fig 4] les figures 3 et 4 illustrent sous forme schématique la détermination du nombre prédéterminé de ressources radio contiguës à allouer.

Selon un mode de réalisation, non représenté, le système de communication, configuré pour mettre en oeuvre le procédé selon la présente invention, comprend, par exemple, au moins une constellation de satellites défilants, et une pluralité d'équipements au sol comprenant au moins un terminal de communication et au moins une station d'ancrage au sol reliés par un réseau.

Chaque station d'ancrage comprend un récepteur/émetteur des signaux radiofréquence (appelés également signaux RF par la suite) qui peut être fixe ou mobile au sol dans une zone géographique connue. Certaines stations d'ancrage (i.e. stations au sol) peuvent être configurées seulement pour émission des signaux RF et certaines autres stations d'ancrage (i.e. stations au sol) peuvent être configurées seulement pour réception des signaux RF.

Selon différents modes de réalisation, le système de communication peut comprendre des stations d'ancrage (i.e. stations au sol) fixes ou mobiles dans des zones géographiques distinctes. Par exemple, le système de communication peut comprendre une paire de stations au sol fixes ou mobiles dans une zone géographique et une paire de stations au sol fixes ou mobiles dans une autre zone géographique.

Optionnellement, au moins une des stations d'ancrage est propre à jouer le rôle de « Hub » en étant connectée en outre à un réseau informatique terrestre, tel qu'un réseau RF ou un réseau filaire. Ainsi, cette station d'ancrage jouant le rôle de « Hub » permet de relayer des signaux entre un satellite et une autre station au sol qui n'est pas couverte directement par un satellite.

La constellation de satellites comprend N (avec N entier) satellites défilants sur une orbite non-géostationnaire, telle que l'orbite terrestre basse ou l'orbite terrestre moyenne. Le nombre N est supérieur à deux, avantageusement supérieur à dix et de préférence supérieur à cinquante. De manière générale, le nombre N peut être compris entre deux et mille. Dans certains modes de réalisation, le nombre N est entre deux et dix mille. Encore dans certains autres modes de réalisation, le nombre N est supérieur à dix mille.

Chaque satellite est par exemple un mini-satellite ou alors un nano-satellite. En outre, de manière connue en soi, chaque satellite comprend une charge utile comprenant l'ensemble de ses composants électroniques permettant d'assurer ses fonctions de communication avec le sol et avec les autres satellites.

Les charges utiles des satellites sont par exemple sensiblement analogues entre elles et comprennent généralement un récepteur/émetteur de signaux radiofréquence, appelé également récepteur/émetteur de signaux RF.

Le récepteur/émetteur de signaux RF permet de recevoir des signaux RF par exemple issus d'une station au sol et d'émettre des signaux RF par exemple également vers une station au sol, en utilisant une ou plusieurs bandes attribuées aux communications satellitaires, telles que les bandes C, X, Ku, Ka, etc. Autrement dit, le récepteur/émetteur de signaux RF permet d'assurer une liaison radiofréquence avec un autre récepteur/émetteur se trouvant à distance du satellite 20-1, comme par exemple une station au sol ou alors un autre satellite.

Pour ce faire, le récepteur/émetteur de signaux RF est connecté à une ou plusieurs antennes aptes à former une pluralité de spots. Chaque faisceau peut couvrir des sous-zones différentes au sein d'une même zone géographique. Ainsi, à l'émission, des signaux RF peuvent être commutés sélectivement vers un ou plusieurs spots couvrant la sous-zone souhaitée.

La charge utile d'un satellite est propre à comprendre d'autres éléments connus tels qu'un module de traitement, un modem d'émission/réception de signaux optiques, un module de commande, etc., qui ne seront pas davantage détaillés par la suite.

En complément facultatif, ledit système de communication comprend en outre un gestionnaire, également appelé orchestrateur par la suite, disposé par exemple au sol, de manière fixe ou mobile et couvert à chaque instant par au moins l'un des satellites de la constellation. Un tel gestionnaire permet notamment de transmettre à au moins un satellite de ladite constellation des données de configuration permettant de contrôler les modules de commande de l'ensemble des satellites de la constellation.

En complément facultatif, ledit système de communication comprend en outre un équipement de contrôle d'accès audit canal d'accès privé mis en oeuvre selon la présente invention. Optionnellement, ledit équipement de contrôle d'accès est embarqué ou non au sein dudit gestionnaire.

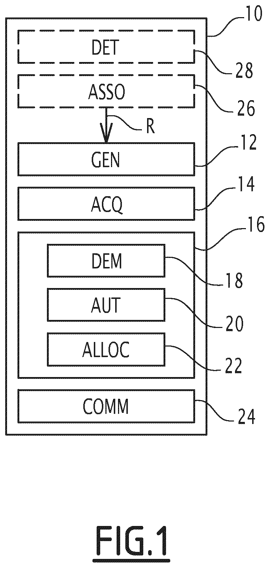

Un procédé 10 de communication au sein d'un canal d'accès privé dont la trame d'accès est diffusée au sein d'un réseau de communication d'un tel système de communication est expliqué par la suite en référence à la figure 1 présentant un organigramme des étapes de ce procédé 10.

Tel qu'illustré par la figure 1, ledit procédé 10 comprend, de manière générale, une première étape 12 de génération GEN d'un aléa propre à être traduit, selon une règle prédéterminée, en une clé d'accès audit canal d'accès privé, ladite clé d'accès définissant une loi de saut de fréquence comprenant au moins une pluralité de positions temporelles et fréquentielles des ressources radio à allouer, dans ladite trame d'accès, selon ledit aléa, audit canal d'accès privé, ladite règle prédéterminée étant connue au préalable par tout équipement dudit système réseau de communication propre à être autorisé à accéder audit canal d'accès privé et/ou à contrôler l'accès audit canal d'accès privé.

Ledit procédé 10 comprend en outre une deuxième étape 14 d'acquisition ACQ et traduction dudit aléa en ladite clé d'accès, par au moins un équipement propre à être autorisé à accéder audit canal d'accès privé et/ou à contrôler l'accès audit canal d'accès privé.

Ensuite, en utilisant ladite clé d'accès obtenue à partir dudit aléa, ledit procédé 10 comprend un ensemble 16 d'étapes comprenant une étape 18 de demande d'accès DEM audit canal d'accès privé mise en oeuvre par ledit au moins un équipement correspondant à un terminal propre à être autorisé à accéder audit canal d'accès privé.

Alternativement ou en complément, ledit ensemble 16 d'étapes comprend une étape 20 d'autorisation d'accès AUT audit canal d'accès privé mise en oeuvre par ledit au moins un équipement correspondant à un équipement de contrôle d'accès audit canal d'accès privé. Il est à noter que pour ce faire, le canal d'accès privé est propre à fonctionner avec un canal de signalisation retour propre à être public afin de permettre aux terminaux en accès privé de savoir via le canal public qu'ils ont été admis et connaitre la consigne de synchronisation à appliquer.

Alternativement ou en complément, ledit ensemble 16 d'étapes comprend une étape 22 d'allocation ALLOC, audit canal d'accès privé, des ressources radio définies par ladite clé d'accès, ladite allocation étant mise en oeuvre par ledit au moins un équipement correspondant à une station de base dudit système de communication.

Enfin, ledit procédé 10 comprend une étape 24 de communication COMM au sein dudit système de communication en utilisant ledit canal d'accès privé, ladite communication étant mise en oeuvre par un terminal autorisé par ledit équipement de contrôle d'accès audit canal d'accès privé.

En complément facultatif, tel que représenté en pointillés, ledit procédé comprend en outre une étape préalable 26 d'association ASSO selon laquelle ladite règle prédéterminée est obtenue par association de chaque valeur d'aléa d'un ensemble de valeurs d'aléa distinctes respectivement à chaque allocation d'un ensemble d'allocations distinctes de ressources radio dans ladite trame d'accès.

En complément facultatif, ladite association 26 prend également en compte au moins un des paramètres appartenant au groupe comprenant au moins :
- un numéro de cellule dans lequel est localisé ledit au moins un équipement dudit système réseau de communication correspondant à un terminal propre à être autorisé à accéder audit canal d'accès privé ;
- un numéro de trame radio propre à être émise durant une trame d'accès, la durée de ladite trame d'accès couvrant une pluralité de durées de trames radio, une trame radio étant dédiée à l'allocation de ressources pour les trafics utilisateurs via les terminaux dudit système de communication ;
- un nombre prédéterminé de ressources radio contiguës à allouer lorsque ledit réseau de communication est un réseau de communications satellitaires mises en oeuvre via au moins une constellation de satellites défilants ;
- un identifiant d'un satellite visible dudit au moins un équipement dudit système de communication correspondant à un terminal propre à être autorisé à accéder audit canal d'accès privé, lorsque ledit réseau de communication est un réseau de communications satellitaires mises en oeuvre via au moins une constellation de satellites défilants.

Selon ce complément facultatif, via l'aléa spatio-temporel selon la présente invention, la position du canal est propre à varier en fonction du numéro de trame et/ou en fonction du numéro de cellule.

En complément facultatif, tel que représenté en pointillés, ledit procédé comprend en outre une étape 28, préalable à ladite étape d'association 26, de détermination DET dudit identifiant de satellite visible et/ou dudit nombre prédéterminé de ressources radio contiguës à allouer, nécessaires à l'accès dudit au moins un équipement dudit système de communication correspondant à un terminal propre à être autorisé à accéder audit canal d'accès privé, sous couverture de ladite au moins une constellation de satellites défilants.

En complément facultatif, ladite étape de détermination 28 est mise en oeuvre par ledit terminal considéré en utilisant les éphémérides reçus de ladite au moins une constellation de satellites défilants, une éphéméride contenant les paramètres orbitaux détaillés pour chaque satellite de la constellation considérée.

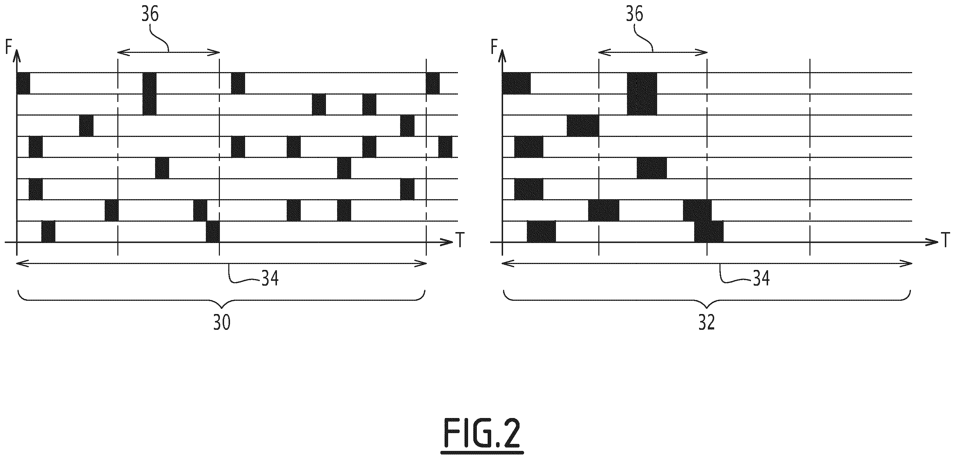

On décrit ci-après plus précisément chacune de ces étapes notamment en relation avec les figures 2 à 4.

Plus précisément, par la suite, de manière non limitative mais uniquement illustrative, on décrit plus précisément la mise en oeuvre de la présente invention au sein d'un système de communication tel que précédemment décrit où la pluralité d'équipements au sol comprenant au moins un terminal de communication et au moins une station d'ancrage au sol reliés par un réseau, sont respectivement des produits SATCOM^{®} de la demanderesse, à savoir au moins un terminal de communication SATCOM^{®} et au moins une station d'ancrage SATCOM^{®}.

En particulier, dans le cas d'un réseau établi entre de tels équipements SATCOM^{®}, si le terminal SATCOM^{®} à la connaissance approximative de sa position, de la position d'un satellite, par exemple acquise par l'intermédiaire des éphémérides diffusés par ledit satellite ou la constellation, et que le réseau indique par ailleurs dans un canal de diffusion le temps de transit entre la station d'ancrage SATCOM^{®} et ledit satellite, le terminal est en mesure de déterminer, préalablement à toute transmission, sa synchronisation par rapport à l'émetteur. De par cette capacité du terminal à se synchroniser, on parle alors de mode d'accès orthogonal.

Dans ce contexte, la génération 12 d'aléa est notamment mise en oeuvre via un générateur d'aléa propre à être embarqué au sein d'une des stations d'ancrage y compris celle propre à jouer le rôle de « Hub », ou au sein dudit gestionnaire ou encore au sein dudit équipement de contrôle d'accès audit canal d'accès privé. L'aléa généré est distribué par un moyen externe, par exemple un injecteur de clés, à tout équipement de la pluralité d'équipements au sol dudit système de communication comprenant au moins un terminal de communication et au moins une station d'ancrage au sol reliés par un réseau.

L'acquisition et la traduction 14 de l'aléa met en oeuvre une fonction générant une clé d'accès selon un algorithme prédéfini et commun aux équipements de ladite pluralité d'équipements, notamment audit au moins un terminal et à ladite au moins une station d'ancrage.

Comme illustré par les exemples 30 et 32 de la figure 2 d'allocation pseudo-aléatoire de ressources radio, la clé d'accès définit une loi de saut de fréquence comprenant au moins une pluralité de positions temporelles et fréquentielles des ressources radio à allouer, représentées en noir, dans ladite trame d'accès 34, selon ledit aléa, audit canal d'accès privé, ladite règle prédéterminée étant connue au préalable par tout équipement dudit système de communication propre à être autorisé à accéder audit canal d'accès privé et/ou à contrôler l'accès audit canal d'accès privé. L'exemple 30 illustre une allocation pseudo-aléatoire avec une ressource radio (i.e. radio bloc), représentée en noir, à la fois et qui « saute » de fréquence au cours du temps, tandis que l'exemple 32 illustre l'allocation pseudo-aléatoire de trois ressources radio contiguës (i.e. radio blocs contigus) à la fois et qui « saute » de fréquence au cours du temps.

Autrement dit, ladite clé d'accès définit de manière plus précise l'agencement des ressources radio dédiées au canal d'accès privé. Un changement de clé d'accès est associé à un changement d'aléa, si bien qu'au cours du temps il est possible de modifier la clé de chiffrement et donc l'aléa qui en dérive pour utiliser un autre agencement des ressources radio dédiées au canal d'accès privé, ce qui rend impossible l'accès à un tel canal privé (i.e. canal d'accès privé) à un équipement cherchant à interférer.

En complément facultatif, ladite loi de saut de fréquence comprenant au moins une pluralité de positions temporelles et fréquentielles des ressources radio à allouer dans ladite trame d'accès audit canal d'accès privé définit leur agencement, selon un axe fréquentiel, avec le nombre et la position des sous-porteuses allouées audit canal d'accès privé, et selon un axe temporel, avec les créneaux temporels utilisables sur lesdites sous-porteuses allouées.

Selon un autre complément facultatif, lorsque ledit réseau de communication est un réseau de communications satellitaires mises en oeuvre via au moins une constellation de satellites défilants, ladite clé d'accès définit également au moins une dimension spatiale correspondant à une direction satellitaire à utiliser par un terminal autorisé par ledit équipement de contrôle d'accès audit canal d'accès privé. Autrement dit, selon ce complément facultatif, il existe une pluralité de satellites vers lesquels le terminal pourrait émettre.

Ainsi la clé d'accès correspond à un schéma unique dans une représentation temps/fréquence, ou encore temps/fréquences/directions.

La traduction de l'aléa, i.e. une variable générée aléatoirement, en une clé d'accès est effectuée soit via une table de correspondance qui aura été préalablement chargée dans le terminal et la station d'ancrage. Elle peut également se faire au moyen d'une traduction algorithmique, l'algorithme ayant été au préalable chargé dans tout équipement de ladite pluralité d'équipement du système de communication comprenant ledit au moins un terminal et ladite au moins une station d'ancrage.

Cette clé d'accès définit pour chaque créneau (de l'anglais *slot*) de la trame d'accès les fréquences des sous-porteuses associées audit canal d'accès privé, autrement dit les fréquences représentées en noir sur la figure 2 des ressources radio (i.e. sous-porteuses) allouées audit canal d'accès privé.

Cette représentation est valide pour une trame d'accès 34 et se reproduit à la trame d'accès suivante 34. Il est à noter sur la figure 2, que la durée de la trame d'accès 34 est en général très supérieure à la durée de la trame radio 36, dans laquelle les allocations des ressources pour les trafics utilisateurs sont effectuées, afin de renforcer l'aspect aléatoire des ressources radio allouées au canal d'accès.

Comme indiqué précédemment, ladite clé d'accès est utilisée à la fois par ledit au moins une terminal utilisateur pour déterminer la configuration du canal d'accès privé, et par la station d'ancrage (i.e. station de base) pour déterminer les positions temporelle et fréquentielle des ressources radio allouées au canal d'accès privé.

Ainsi de manière pratique, lorsqu'un terminal utilisateur souhaite accéder au réseau privé, via ledit canal d'accès privé, il détermine la clé d'accès à partir de l'aléa et du numéro de cellule indiqués par le canal de diffusion.

L'aléa déterminant les caractéristiques du canal d'accès privé, ainsi que la méthode d'accès à ce canal n'étant connus que du réseau et des terminaux du système de communication propres à être autorisés à y accéder.

Le début de la trame d'accès est déterminé par le terminal à partir du numéro de trame radio, préalablement déterminé par le terminal en écoutant classiquement les canaux de diffusion publics de la cellule.

Il est à noter que si une cellule de communication est accessible via une pluralité de satellites, une clé d'accès est déterminée pour chaque satellite visible, en fonction de l'identité du satellite visible du terminal, laquelle est connue au moyen d'éphémérides préalablement chargés.

La station de base procède quant à elle de manière symétrique en allouant des ressources au canal d'accès privé selon ladite loi de saut de fréquence définie par ladite clé d'accès obtenue à partir dudit aléa.

Comme notamment illustré par l'exemple 32 de la figure 2, dans un mode de réalisation spécifique au contexte spatial. Le motif (de l'anglais *pattern*) des ressources radio (i.e. radio blocs) alloués dans la trame est fonction du numéro de trame mais également contraint par le nombre de ressources radio (i.e. radio blocs) contigus à allouer.

En effet, l'accès initial ayant vocation à permettre une synchronisation fine du terminal accédant audit canal privé (i.e. canal d'accès privé), le nombre de ressources radio contiguës (i.e. radio blocs contigus) temporellement à allouer en émission est conditionnée à l'incertitude sur le temps de propagation du signal.

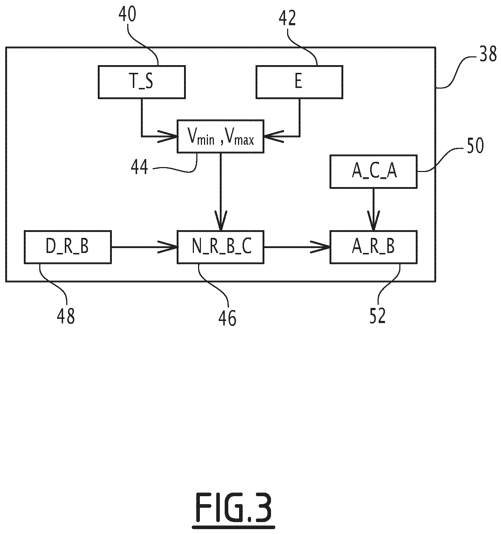

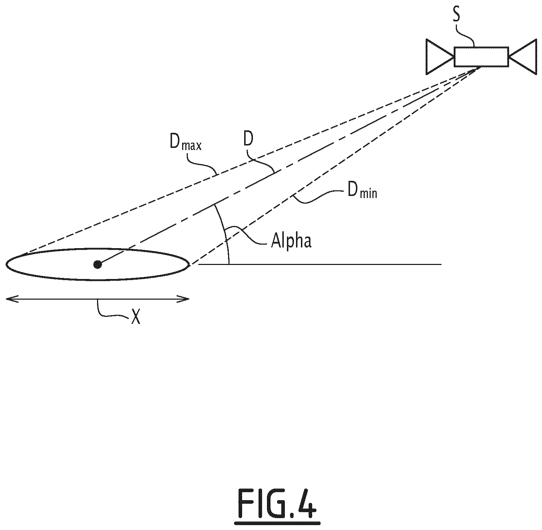

Plus précisément, en complément facultatif, comme illustré par les figure 3 et 4, en complément facultatif, ladite étape de détermination dudit nombre prédéterminé de ressources radio contiguës à allouer comprend la détermination des valeurs maximale et minimale des temps de transit depuis le centre du spot satellitaire dans lequel est localisé ledit terminal, et la prise en compte desdites valeurs maximale et minimale des temps de transit pour déterminer ledit nombre prédéterminé de ressources radio contiguës.

Plus précisément, selon cette variante illustrée par l'ensemble d'étapes 38 de la figure 3, lors de ladite étape de détermination dudit nombre prédéterminé de ressources radio contiguës, ledit terminal détermine tout d'abord au cours d'une étape 40 la taille du spot T_S du satellite qui l'éclaire ainsi que, successivement ou parallèlement, lors d'une étape 42 son éphéméride E.

La figure 4, illustre un tel spot de diamètre X, Alpha l'angle minimal sous lequel le satellite S éclaire ce spot, D la distance maximum à laquelle se trouve ce satellite S du centre du spot.

A partir de l'éphéméride E permettant de déterminer la distance D, et de la taille de spot T_S ledit terminal détermine, au cours d'une étape 44, les valeurs maximale Vmax et minimale Vmin des temps de transit depuis le centre du spot satellitaire dans lequel est localisé ledit terminal, tel que :
- Vmax=Dmax/c, avec c la célérité de l'onde et Dmax=D+Xcos(Alpha) tel que représenté sur la figure 4, et
- Vmin=Dmin/c, avec c la célérité de l'onde et Dmin=D-Xcos(Alpha) tel que représenté sur la figure 4.

Ainsi, l'étalement du temps de trajet est donné par DeltaT= (Dmax-Dmin)/c.

Au cours de l'étape 46, le terminal détermine ensuite le nombre N_R_B_C de ressources radio contiguës (i.e. radio blocs contigus) à allouer pour l'accès en mode privé, et ce en fonction dudit l'étalement du temps de trajet DeltaT, et également de la durée T_RB d'une ressource radio obtenue préalablement lors d'une étape 48 de détermination D_R_B de cette durée.

Plus précisément, le nombre N_R_B_C de ressources radio contiguës à allouer pour l'accès en mode privé est l'arrondi supérieur du ratio : DeltaT/ T_RB.

En parallèle, une étape 50 d'application2 A_C_A des clés d'accès telle que décrite précédemment est effectuée et au cours de l'étape 52 l'allocateur de ressources radio de ladite au moins une station d'ancrage par exemple utilise ledit nombre N_R_B_C de ressources radio contiguës et la loi de saut de fréquence pour mettre en oeuvre l'allocation de ressources au canal privé (i.e. canal d'accès privé) selon la présente invention.

Autrement dit, selon cette variante de réalisation, dans une phase de planification, le procédé détermine 46 le nombre de ressources radio contiguës (i.e. radio blocks contigus) nécessaires à l'accès d'un terminal sous couverture d'une constellation. Dans la phase d'accès, l'allocateur des ressources radio (i.e. radio blocks) tient compte de ce nombre N_R_B_C et des clés d'accès pour déterminer l'allocation effective des M ressources radio (i.e. radio blocks) qui seront utilisables par les terminaux en accès privé. Le terminal est quant à lui configuré pour connaitre le nombre de ressources radio (i.e. radio blocks) contigus lorsqu'il est sous couverture de la constellation, et est en mesure de déterminer les temps de transit depuis le centre du spot à partir des éphémérides qu'il aura reçu.

Il est à noter que plusieurs canaux d'accès privés selon la présente invention sont propres à coexister, notamment pour répondre à un besoin de faire coexister plusieurs systèmes de communication « privés » distincts (de l'anglais *slice*)*.* Ainsi, chaque « réseau privé » peut ainsi présenter un canal d'accès privé qui lui est propre.

A noter que dans ce cas particulier de coexistence, une collision est possible lorsque dans certaines trames la même ressource radio privée est attribuées à deux canaux d'accès privés distincts coexistant.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi de fournir à un terminal un accès privé et aléatoire sous une constellation donnée à un canal d'accès dont les caractéristiques en tant que telles ne sont jamais diffusées, le canal d'accès privé étant défini par une loi de saut de fréquence dérivée d'une clé d'accès commune à l'allocateur (i.e. ladite au moins une station d'ancrage) et audit au moins un terminal du système de communication selon la présente invention. Un tel canal d'accès est alors « invisible » pour un interférent intentionnel du fait que la position des ressources radio ne lui est pas connue et varie.

Selon une variante particulière, telle que décrite précédemment, le canal d'accès privé est formé par un ensemble de ressources radio contiguës (i.e. radio blocks contigus) temporellement et dont les ressources radio contiguës (i.e. radio blocks contigus) changent de fréquence selon ladite clé d'accès dont est dérivé l'aléa, ce nombre étant notamment déterminé et alloués en fonction des valeurs maximale et minimale des temps de transit compte tenu du fait que le terminal à la connaissance du spot dans lequel il se trouve et des éphémérides de la constellation.

La solution selon la présente invention évite ainsi l'inconvénient principal du canal en accès public qui est finalement de ne pas être privé, par privé on entend inconnu sauf par les membres (i.e. équipement) y ayant accès. De plus, cette solution évite l'inconvénient de la planification statique qui ne permet pas le passage à l'échelle en nombre de spots ou de terminaux. Enfin, cette solution évite la mise en oeuvre d'un canal d'accès privé statique car selon la présente invention le canal évolue dynamiquement en fonction d'une clé d'accès commune, car les ressources radio allouées varient en même temps que la clé d'accès et l'aléa dérivant de cette clé d'accès.

En outre, il est à noter que cette solution est avantageusement compatible des formes d'ondes des radio cellulaires appliquées aux équipements SATCOM^{®}, réseau non terrestre de cinquième génération, 5G NTN (de l'anglais *Non-Terrestrial Network*), et utilement propre à se décliner dans le cadre du standard 3GPP, en particulier en apportant une réponse à l'accès privé sous constellation défilante.

## Revendications

1. Procédé (10) de communication au sein d'un canal d'accès privé dont la trame d'accès est diffusée au sein d'un réseau de communication d'un système de communication, le procédé comprenant les étapes suivantes :
- génération (12) d'un aléa propre à être traduit, selon une règle prédéterminée, en une clé d'accès audit canal d'accès privé, ladite au moins une clé d'accès définissant une loi de saut de fréquence comprenant au moins une pluralité de positions temporelles et fréquentielles des ressources radio à allouer, dans ladite trame d'accès, selon ledit aléa, audit canal d'accès privé, ladite règle prédéterminée étant connue au préalable par tout équipement dudit système de communication propre à être autorisé à accéder audit canal d'accès privé et/ou à contrôler l'accès audit canal d'accès privé ;
- acquisition (14) et traduction dudit aléa en ladite clé d'accès, par au moins un équipement propre à être autorisé à accéder audit canal d'accès privé et/ou à contrôler l'accès audit canal d'accès privé;
- en utilisant ladite clé d'accès obtenue à partir dudit aléa :
- demande (18) d'accès audit canal d'accès privé mise en oeuvre par ledit au moins un équipement correspondant à un terminal propre à être autorisé à accéder audit canal d'accès privé,
et/ou
- autorisation (20) d'accès audit canal d'accès privé mise en oeuvre par ledit au moins un équipement correspondant à un équipement de contrôle d'accès audit canal d'accès privé ;
et/ou
- allocation (22), audit canal d'accès privé, des ressources radio définies par ladite clé d'accès, ladite allocation étant mise en oeuvre par ledit au moins un équipement correspondant à une station de base dudit système de communication ;
- communication (24) au sein dudit système de communication en utilisant ledit canal d'accès privé, ladite communication étant mise en oeuvre par un terminal autorisé par ledit équipement de contrôle d'accès audit canal d'accès privé
et dans lequel, lorsque ledit réseau de communication est un réseau de communications satellitaires mises en oeuvre via au moins une constellation de satellites défilants, ladite clé d'accès définit également au moins une dimension spatiale correspondant à une direction satellitaire à utiliser par un terminal autorisé par ledit équipement de contrôle d'accès audit canal d'accès privé.

2. Procédé (10) de communication selon la revendication 1, dans lequel ladite loi de saut de fréquence comprenant au moins une pluralité de positions temporelles et fréquentielles des ressources radio à allouer dans ladite trame d'accès audit canal d'accès privé définit leur agencement, selon un axe fréquentiel, avec le nombre et la position des sous-porteuses allouées audit canal d'accès privé, et selon un axe temporel, avec les créneaux temporels utilisables sur lesdites sous-porteuses allouées.

3. Procédé (10) de communication selon la revendication 1 ou 2, dans lequel ladite règle prédéterminée est obtenue par association (26) préalable de chaque valeur d'aléa d'un ensemble de valeurs d'aléa distinctes respectivement à chaque allocation d'un ensemble d'allocations distinctes de ressources radio dans ladite trame d'accès.

4. Procédé (10) de communication selon la revendication 3, dans lequel ladite association (26) prend également en compte au moins un des paramètres appartenant au groupe comprenant au moins :
- un numéro de cellule dans lequel est localisé ledit au moins un équipement dudit système de communication correspondant à un terminal propre à être autorisé à accéder audit canal d'accès privé ;
- un numéro de trame radio (36) propre à être émise durant une trame d'accès (34), la durée de ladite trame d'accès couvrant une pluralité de durées de trames radio, une trame radio étant dédiée à l'allocation de ressources pour les trafics utilisateurs via les terminaux dudit système de communication ;
- un nombre prédéterminé de ressources radio contiguës à allouer lorsque ledit réseau de communication est un réseau de communications satellitaires mises en oeuvre via au moins une constellation de satellites défilants ;
- un identifiant d'un satellite visible dudit au moins un équipement dudit système de communication correspondant à un terminal propre à être autorisé à accéder audit canal d'accès privé, lorsque ledit réseau de communication est un réseau de communications satellitaires mises en oeuvre via au moins une constellation de satellites défilants.

5. Procédé (10) de communication selon la revendication 4, comprenant en outre, préalablement à ladite association (26), une étape de détermination (28) dudit identifiant de satellite visible et/ou dudit nombre prédéterminé de ressources radio contiguës à allouer, nécessaires à l'accès dudit au moins un équipement dudit système de communication correspondant à un terminal propre à être autorisé à accéder audit canal d'accès privé, sous couverture de ladite au moins une constellation de satellites défilants.

6. Procédé (10) de communication selon la revendication 5, dans lequel ladite étape de détermination (28) est mise en oeuvre par ledit terminal en utilisant les éphémérides reçus de ladite au moins une constellation de satellites défilants.

7. Procédé (10) de communication selon la revendication 6, dans lequel ladite étape de détermination (28) dudit nombre prédéterminé de ressources radio contiguës à allouer comprend la détermination des valeurs maximale et minimale des temps de transit depuis le centre du spot satellitaire dans lequel est localisé ledit terminal, et la prise en compte desdites valeurs maximale et minimale des temps de transit pour déterminer ledit nombre prédéterminé de ressources radio contiguës.

8. Programme comportant des instructions logicielles qui, lorsqu'elles sont exécutées par un ordinateur, mettent en oeuvre un procédé de communication au sein d'un canal d'accès privé dont la trame d'accès est diffusée au sein d'un réseau de communication selon l'une quelconque des revendications précédentes.

9. Système de communication configuré pour mettre en oeuvre le procédé de communication au sein d'un canal d'accès privé dont la trame d'accès est diffusée au sein d'un réseau de communication selon l'une quelconque des revendications précédentes 1 à 7.
